# EUROPEAN PATENT SPECIFICATION

(11) **EP 3 397 681 B1**
(45) Date of publication and mention of the grant of the patent: **04.12.2024**
(21) Application number: 16820283.6
(22) Date of filing: 23.12.2016
(51) Int. Cl.: C08K 5/1545

(54) **STABILISED POLYOLEFIN FILM**
STABILISIERTER POLYOLEFINFILM
FILM DE POLYOLÉFINE STABILISÉE

(30) Priority: 29.12.2015 EP 15202911
(43) Date of publication of application: 07.11.2018
(73) Proprietor: SABIC Global Technologies B.V., 4612 PX Bergen op Zoom (NL)
(72) Inventor: VAN DEN ESSCHERT, Bart, 6160 GA Geleen (NL); VAN MIERLOO, Sarah, 6160 GA Geleen (NL); WILLEMS, Maria, Johanna, 6160 GA Geleen (NL)
(74) Representative: Sabic Intellectual Property Group
(86) International application number: PCT/EP2016/082545
(87) International publication number: WO 2017/114782

(56) References cited:
- EP-A2- 0 682 073
- EP-A2- 0 878 502
- WO-A1-2014/190298
- US-A- 5 132 344
- KARSTEN BEUTNER ET AL: "Polyethylene", RÖMPP ONLINE 4.0, 1 December 2009 (2009-12-01), pages 1 - 6, XP055614634, Retrieved from the Internet <URL:https://roempp.thieme.de/roempp4.0/do/data/RD-16-03243> [retrieved on 20190822]
- 17, MACROMOL. SYMP, 1 January 2001 (2001-01-01), pages 17 - 29, XP055138079, Retrieved from the Internet <URL:http://onlinelibrary.wiley.com/store/10.1002/1521-3900(200112)176:1<17::AID-MASY17>3.0.CO;2-D/asset/17_ftp.pdf?v=1&t=hzmp8pxo&s=51ee5feeac837acbc29c0ea445af10e33e544234> [retrieved on 20140903]

## Description

The invention relates to a a film prepared using a stabilized polyolefin composition consisting of a copolymer of ethylene and at least one α-olefin and α-tocopherol.

The stabilization of polyolefin composition is known in the art.

Suitable stabilisers known in the art are for example synthetic (poly)phenolic compounds such as tetrakis[methylene-3-(3',5')-di-t-butyl-4-hydroxyphenyl)propionate] methane; octadecyl 3,5-di-t-butyl-4-hydroxyhydrocinnamate; 1,1,3-tris(2-methyl-4-hydroxy-5-t-butylphenyl) butane; 1,3,5-trimethyl-2,4,6-tris(3,5-di-t-butyl-4-hydroxybenzyl)benzene, bis-[3,3-bis-(4'-hydroxy-3'-t-butylphenyl butanoic acid]-glycol ester; tris(3,5-di-t-butyl-4-hydroxy benzyl)isocyanurate; 1,3,5-tris(4-t-butyl-2,6-dimethyl-3-hydroxy-benzyl)isocyanurate; 5-di-t-butyl-4-hydroxy hydrocinnamic acid triester with 1,3,5-tris(2-hydroxyethyl)-s-triazine-2,4,6(1H, 3H, 5H)trione; p-cresol/dicyclopentadiene butylated reaction product and 2,6-bis(2'-bis-hydroxy-3'-t-butyl-5'-methyl-phenyl-4-methyl-phenol).

The stabilized polyolefin compounds may be processed via for example injection moulding, blow moulding, extrusion moulding, compression moulding or thin-walled injection moulding techniques. The obtained products may be applied in a huge amount of applications for example in food contact packaging applications, biomedical applications, health care applications or pharmaceutical applications.

Most of the synthetic (poly)phenolic antioxidants used are strictly regulated by governments because they are suffering from serious limitations. Synthetic antioxidants can thereby diffuse into the surrounding medium. This can in turn lead to contamination of food and/or other human-used products with potentially toxic by-product substances. This problem may arise simply because some antioxidants are toxic above a certain level of concentration.

Accordingly, the use of such antioxidants is already an issue in for example food- and water contact applications, in medical and pharmaceutical devices. With increased consumer concerns about the amount of chemicals in their foods, processors are looking for improved ways to protect their products.

There is a continuous need to provide improved stabilized polyolefin compositions having no dangerous effects when dispersed in the environment and/or which also fulfill all requirements related to processing or short term heat stabilization and/or which shows low yellowness increase during multiple extrusion.

The invention is a film prepared using a stabilized polyolefin composition that consists of:
- A. a copolymer of ethylene and at least one α-olefin,
- B. between 170 and 300 ppm by weight of α-tocopherol relative to the component A.

The use of this package results in the ability to introduce a bio-based antioxidant package with excellent resistance to oxidative degradation.

Additional advantages of the stabilizer composition according to the invention are the presence of less discoloration of the material after recycling.

Furthermore the stabilizer composition according to the invention results in improved processing stability and/or improved organoleptic properties.

The stabilized polyolefin composition is efficiently stabilized, while limiting and/or avoiding the use of toxic substances. This may especially for example allow to improve processing stability, especially by reducing cross-linking during extrusion and/or multiple extrusions. This may also for example allow to reduce yellowness increases during extrusion and/or multiple extrusions.

A further advantage is that the stabilizer composition according to the invention results in improved organoleptic properties. Moreover, the risk related to and/or the amount of compound(s) possibly migrating out of the stabilized polyolefin composition may be reduced.

Component A is a copolymer of ethylene with at least one α-olefin, being a linear low density polyethylene (LLDPE). A copolymer of ethylene with at least one α-olefin may thereby preferably be a copolymer comprising ethylene and at least one α-olefin or a copolymer of ethylene and only one α-olefin.

Linear low-density polyethylene (LLDPE) may for example be obtained by polymerizing ethylene with at least one α-olefin, which may be selected from 1-butene, 1-pentene, 4-methyl-1-pentene, 1-hexene, 1-heptene and/or 1-octene, preferably 1-butene.

The linear low-density polyethylene (LLDPE) used according to the invention is produced using at least one Ziegler-Natta catalyst comprising Mg and at least one or one of Ti, Hf or Zr. This may further contribute to an improved stabilization.

For example, the polymerized α-olefin may for example account for between 0.05 w% and 15 w%, preferably between 0.1 w% and 12 w%, further preferred between 1 w% and 10 w% , further preferred between 0.1 w% and 5 w% or between > 5 w% and < 10 w% compared to the total weight of the linear low density polyethylene.

The copolymer of ethylene and at least one α-olefin has a density as determined according to ISO 1183-1 (2012), method A between 913 kg/m³ and 923 kg/m³, further preferred between > 915 kg/m³ and < 921 or < 920 kg/m³. This may lead to mechanical properties suitable for the use for film applications.

A copolymer of ethylene and at least one α-olefin may for example have an MFI represented by the corresponding melt mass flow rate (MFR) as measured according to ISO 1131-1 (2011) at 190°C and at a load of 2.16 kg of between 0.1 dg/min and 10 dg/min, preferably between 0.5 dg/min and 5 dg/min, further preferred between 0.5 dg/min and 3 dg/min, even further preferred >0.5 dg/min and < 2 dg/min, even further preferred >0.7 dg/min and < 1.5 dg/min. This may lead to a processability suitable for the use for film applications.

A copolymer of ethylene and at least one α-olefin, especially LLDPE, as used according to the invention may for example have an Mw/Mn between 4 and 12, preferably between 4.5 and 11, further preferred between 4.7 and 10, further preferred between 5 and 8, further preferred between > 5 and < 7, further preferred between > 5.5 and < 6.5 and/or have an Mz/Mw between 4 and 12, preferably between 4.5 and 11, further preferred between 4.7 and 10, further preferred between 5 and 8, further preferred between > 5 and < 7, further preferred between > 5.8 and < 6.8. This may further contribute to an improved stabilization.

LLDPE may preferably be produced using a gas phase or slurry process. The production processes of polyethylenes are summarised in "Handbook of Polyethylene" by Andrew Peacock (2000; Dekker; ISBN 0824795466) at pages 43-66.

Component B is α-tocopherol.

According to the invention the α-tocopherol may be preferably synthetic α-tocopherol.

A suitable example of α-tocopherol and/or synthetic α-tocopherol according to the invention may be is Irganox E 201 (supplied by BASF) which is a racemic mixture of equal amounts of all eight possible stereoisomers of α-tocopherol (RRR, SSS, RRS, RSR, SSR, SRS, SRR, RSS) and is referred to as dl-α-tocopherol or all-rac-alpha-tocopherol.

The use of α-tocopherol according to the invention may for example allow to achieve efficient stabilization with relatively low loadings of α-tocopherol.

The stabilized polyolefin composition may preferably not comprise other tocopherols and/or comprise no tocotrienol and/or no natural vitamin E and/or no other antioxidant and/or no other compound comprising at least one phenolic motif. The stabilized polyolefin composition may preferably comprise only α-tocopherol as antioxidant. This may allow an efficient stabilization of the stabilized polyolefin composition, while reducing the risk associated with and/or the amount of compounds that may migrate out of the stabilized polyolefin composition. This may thus reduce possible health hazards.

The amount of component B ranges between 170 ppm and 300 ppm by weight, relative to the component A. This may allow an efficient stabilization of the stabilized polyolefin composition, while reducing the risk associated with and/or the amount of compounds that may migrate out of the stabilized polyolefin composition. This may thus reduce possible health hazards and may further contribute to an improved stabilization.

Another advantage of the stabilized polyolefin composition may be an improved color retention after recycling.

In a stabilized polyolefin composition according to the invention, the increase of MFR between the 1^{st} and the 6^{th} extrusion may preferably for example be between > 0 and <0.5 g/10min, preferably between > 0 and <0.2 g/10min and/or the increase of yellowness index may preferably for example be between the 3^{rd} and the 6^{th} extrusion may be > 0 and <0.7, preferably > 0 and < 0.5, and/or the OIT after the 6^{th} extrusion may preferably for example be between 2. 5 and 18 min.

That the stabilized polyolefin composition consists of the components listed above may thereby means that no other antioxidant and/or no other stearate or hydrotalcite and/or no other compound/component is present.

The composition is used in the production of specific articles being films, especially for packaging applications such as food and/or beverage packaging applications, for biomedical applications for example in-vivo applications, health care applications and/or pharmaceutical applications, medical applications, especially films for biomedical and/or health care, and/or pharmaceutical and/or medical applications.

The invention will now be elucidated by way of the following examples without however being limited thereto.

### Examples

The following compounds were used:
- linear low density polyethylene (LLDPE): SABIC^{®} LLDPE 118NE (without additives (no stabilizers, no acid scavengers)
- α-tocopherol purchased from BASF (Irganox^{®} E 201)
- calcium stearate PLC (vegetable based) supplied by Faci S.p.A.

### Multiple Extrusion Experiments:

A Leistritz Micro 27/GL24 Schnecke 10 was used under air. Multiple-pass extrusion involves repeatedly passing the polymer through an extruder and then collecting the samples after each pass. After the compounding extrusion (first extrusion step), the pellets were re-extruded five more times with samples being taken after each pass through the extruder.

### Melt Flow Index Measurements:

Melt stability was characterized after each extrusion step using melt flow index measurements (MFI) by measuring the melt flow rate after each extruder pass. MFI was measured by applying a standard load of 2.16 kg at a melt temperature of 190°C, in accordance with ASTM D 1238-13. Results are shown below in Fig. 1.

### Oxidation Induction Time (OIT) Measurements:

Oxidation Induction Time (OIT) has been measured after each extrusion step according to ISO 11357-6: Plastics -- Differential scanning calorimetry (DSC) -- Part 6: Determination of oxidation induction time (isothermal OIT) in duplicate.
Temperature: 200°C
Heating rate: 20°C/min
Results are shown below in Fig. 2.

### Yellowness Index Measurements:

Yellowness index data was obtained from instrumental color measurements with following equipment and under the following conditions:
- Spectrophotometer CM-5 (Konica Minolta)
- Light source D65
- 10° viewing angle
- Diffuse illumination (8° viewing)
- Reflectance, SCE (Specular component excluded)
- Conforms to ASTM E313 (96) standard

Results are reported in Table 2 below.

Table 1 shows a comparison between a stabilized polyolefin compositions according to the invention (III) and comparative examples I, II, C1 and C2.

**Table 1**

| | | Concentration versus LLDPE |
|---|---|---|
| C1 | No additives | 0 |
| I | α-tocopherol | 50 ppm |
| Ib | α-tocopherol | 75 ppm |
| II | α-tocopherol | 100 ppm |
| IIb | α-tocopherol | 150 ppm |
| III | α-tocopherol | 200 ppm |
| C2 | Irganox 1076 + Irgafos 168 | 200 ppm + 800 ppm |

Irganox 1076 is thereby octadecyl 3,5-di-t-butyl-4-hydroxyhydrocinnamate and Irgafos 168 is thereby tris (2,4-di-t-butylphenyl) phosphite.

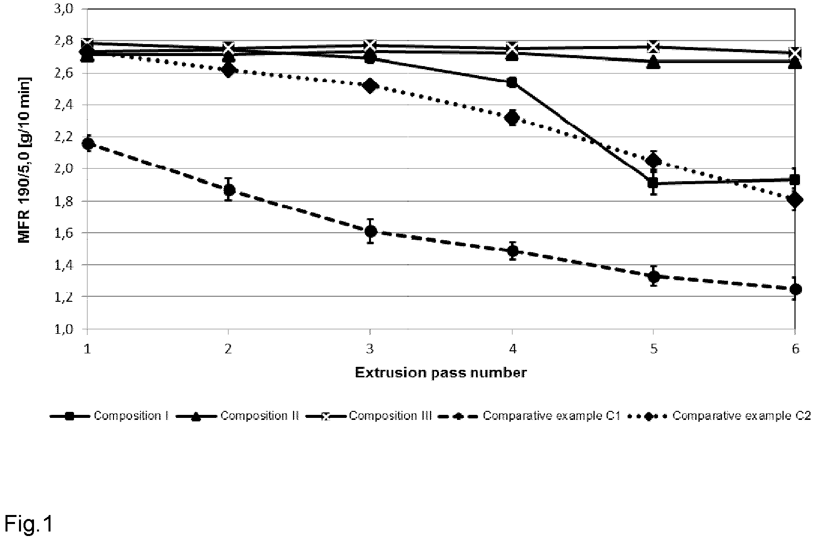

Comparison of compositions I to III with comparative examples C1 and C2 shows that processing stability for the compositions I to III is better than for C1 and/or comparable or better than for C2, in that the MFR does not significantly decrease after two consecutive extrusions, preferably even after 3 consecutive extrusions and for composition II and III even after 6 consecutive extrusions. This means that cross-linking occurring during extrusion may be reduced.

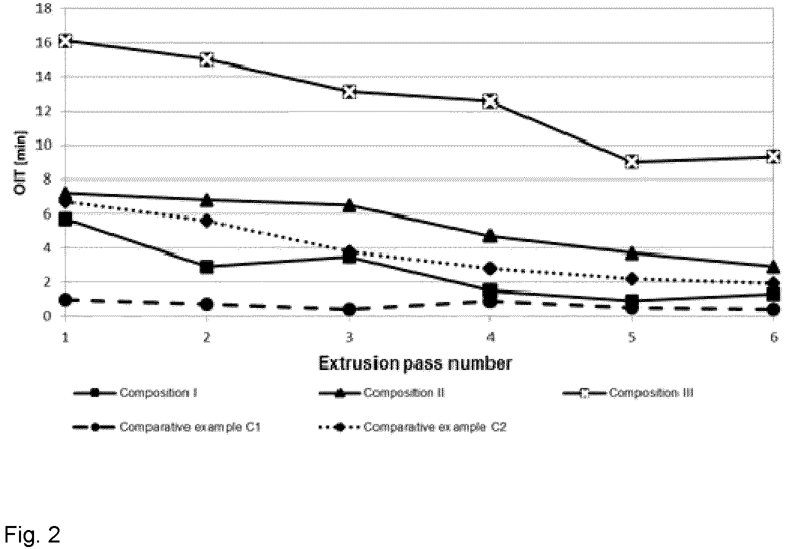

Moreover, OIT can be increased for the compositions III compared to I, II, C1 and C2. Furthermore, an increased OIT may also be maintained over several consecutive extrusions.

## Claims

1. A film prepared using a stabilized polyolefin composition, wherein the stabilized polyolefin composition consists of:
A) a copolymer of ethylene and at least one α-olefin, wherein the copolymer of ethylene and at least one α-olefin is a linear low-density polyethylene (LLDPE) produced using at least one Ziegler-Natta catalyst comprising Mg and at least one of Ti, Hf or Zr, having a density as determined in accordance with ISO 1183-1 (2012), method A, of ≥ 913 kg/m³ and ≤ 923 kg/m³, and
B) between 170 and 300 ppm by weight of α-tocopherol relative to the component A.

2. A film according claim 1, wherein component A has a melt mass flow rate as measured according to ISO 1131-1 (2011) at 190°C and a load of 2.16 kg of between 0.5 dg/min and 3 dg/min.

3. A film according to any one of claims 1-2, wherein component A has an Mw/Mn of between 4 and 12.

4. A film according to any one of claims 1-3, wherein component A has an Mz/Mw of between 4 and 12.

5. A film according to any one of claims 1-4, wherein the α-olefin is selected from 1-butene, 1-pentene, 4-methyl-1-pentene, 1-heptene, and 1-octene.

6. A film according to any one of claims 1-4, wherein the α-olefin is 1-butene.

7. A film according to any one of claims 1-4, wherein the linear low density polyethylene comprises between 0.05 wt% and 15 wt% of polymerized α-olefin compared to the total weight of the linear low density polyethylene.

## Patentansprüche

1. Folie, hergestellt unter Verwendung einer stabilisierten Polyolefinzusammensetzung, wobei die stabilisierte Polyolefinzusammensetzung aus Folgendem besteht:
A) einem Copolymer aus Ethylen und mindestens einem α-Olefin, wobei das Copolymer aus Ethylen und mindestens einem α-Olefin ein lineares Polyethylen niedriger Dichte (LLDPE) ist, das unter Verwendung mindestens eines Ziegler-Natta-Katalysators hergestellt wird, der Mg und mindestens eines von Ti, Hf oder Zr umfasst und eine Dichte, bestimmt nach ISO 1183-1 (2012), Verfahren A, von ≥ 913 kg/m³ und ≤ 923 kg/m³ aufweist, und
B) zwischen 170 und 300 ppm nach Gewicht von α-Tocopherol bezogen auf die Komponente A.

2. Folie nach Anspruch 1, wobei Komponente A eine Schmelzmassenflussrate, gemessen nach ISO 1131-1 (2011) bei 190 °C und einer Last von 2,16 kg, zwischen 0,5 dg/min und 3 dg/min aufweist.

3. Folie nach einem der Ansprüche 1-2, wobei Komponente A ein Mw/Mn zwischen 4 und 12 aufweist.

4. Folie nach einem der Ansprüche 1-3, wobei Komponente A ein Mz/Mw zwischen 4 und 12 aufweist.

5. Folie nach einem der Ansprüche 1-4, wobei das α-Olefin aus 1-Buten, 1-Penten, 4-Methyl-1-penten, 1-Hepten und 1-Octen ausgewählt ist.

6. Folie nach einem der Ansprüche 1-4, wobei das α-Olefin 1-Buten ist.

7. Folie nach einem der Ansprüche 1-4, wobei das lineare Polyethylen niedriger Dichte verglichen mit dem Gesamtgewicht des linearen Polyethylens niedriger Dichte zwischen 0,05 Gew.-% und 15 Gew.-% polymerisiertes α-Olefin umfasst.

## Revendications

1. Film préparé à l'aide d'une composition de polyoléfine stabilisée, dans lequel la composition de polyoléfine stabilisée consiste en :
A) un copolymère d'éthylène et d'au moins une α-oléfine, dans lequel le copolymère d'éthylène et d'au moins une α-oléfine est un polyéthylène basse densité linéaire (LLDPE) produit en utilisant au moins un catalyseur Ziegler-Natta comprenant du Mg et au moins un élément parmi Ti, Hf ou Zr, présentant une masse volumique telle que déterminée conformément à la norme ISO 1183-1 (2012), méthode A, de ≥ 913 kg/m³ et ≤ 923 kg/m³, et
B) entre 170 et 300 ppm en poids d'α-tocophérol par rapport au composant A.

2. Film selon la revendication 1, dans lequel le composant A présente un indice de fluidité à chaud tel que mesuré selon la norme ISO 1131-1 (2011) à 190 °C et une charge de 2,16 kg compris entre 0,5 dg/min et 3 dg/min.

3. Film selon l'une quelconque des revendications 1-2, dans lequel le composant A présente un Mw/Mn compris entre 4 et 12.

4. Film selon l'une quelconque des revendications 1-3, dans lequel le composant A présente un Mz/Mw compris entre 4 et 12.

5. Film selon l'une quelconque des revendications 1-4, dans lequel l'a-oléfine est choisie parmi le 1-butène, le 1-pentène, le 4-méthyl-1-pentène, le 1-heptène et le 1-octène.

6. Film selon l'une quelconque des revendications 1-4, dans lequel l'a-oléfine est le 1-butène.

7. Film selon l'une quelconque des revendications 1-4, dans lequel le polyéthylène basse densité linéaire comprend entre 0,05 % en poids et 15 % en poids d'α-oléfine polymérisée par rapport au poids total du polyéthylène basse densité linéaire.
